# EUROPEAN PATENT APPLICATION

(11) **EP 2 738 571 A1**
(43) Date of publication of application: **04.06.2014**
(21) Application number: 11870165.5
(22) Date of filing: 27.07.2011
(51) Int. Cl.: G01S 17/10

(54) **OPTICAL WAVE DISTANCE MEASUREMENT DEVICE**

(71) Applicant: Sick Optex Co., Ltd., Kyoto-shi, Kyoto 600-8815 (JP)
(72) Inventor: YUGUCHI, Tasuku, Kyoto-shi Kyoto 600-8815 (JP)
(74) Representative: Bugnion Genève
(86) International application number: PCT/JP2011/067084
(87) International publication number: WO 2013/014761

(57) **Abstract**

An optical wave distance measurement device shifts a binarizing threshold value, used during binarization of a received light signal, at a light projecting period and a non-light projecting period for a light projecting circuit (1). In addition, the optical wave distance measurement device: arranges measurement and reference laser diodes (LD1, LD2) for the light projecting circuit (1) together in near vicinity and measurement and reference dual gate MOSFETs (Q1 Q2) that drive same together in near vicinity, such that temperatures for the same type become similar; drives both the measurement and reference laser diodes (LD1, LD2) using the same drive current determined by the monitor current for one of the measurement and reference laser diodes (LD1, LD2); and causes a common light receiving circuit (2) to receive both the projected measurement light signal and the projected reference light signal.

## Description

### BACKGROUND OF THE INVENTION

### (Field of the Invention)

The present invention relates to an optical wave distance measurement device for measuring the distance from the distance measuring device to an object to be measured by the utilization of reflection of rays of light.

### (Description of Related Art)

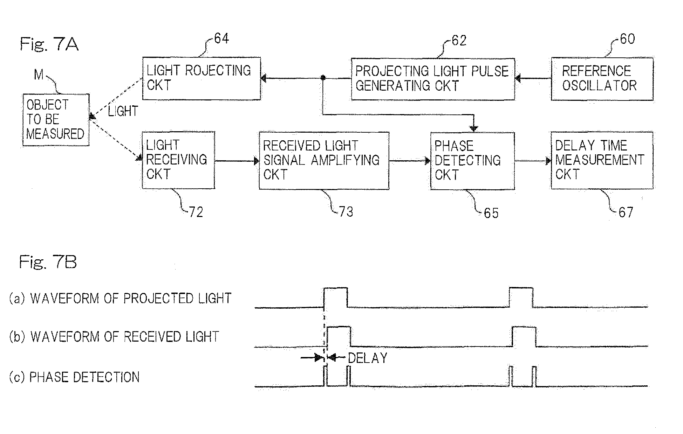

Fig. 7A illustrates a basic structure of the conventional optical wave distance measurement device and Fig. 7B illustrates waveforms of measurements performed thereby. As shown in Fig. 7A, the conventional optical wave distance measurement device is so designed that a measurement light (projected light) signal, which is a high frequency modulated light, generated by a projecting light pulse generating circuit 62 on the basis of a predetermined frequency from a reference oscillator 60, can be projected from a light projecting circuit 64 towards an object M to be measured and rays of light reflected from the object M is then received by a light receiving circuit 72 at a timing delayed a certain length of time corresponding to the distance between the optical wave distance measurement device to the object M, the light receiving circuit 72 in turn providing a received light signal that is amplified by a received light signal amplifier 73 to a required amplitude and is then supplied to a phase detecting circuit 65.

In the phase detecting circuit 65, as shown in Fig. 7B, a phase lag (shown in chart (c) of Fig. 7B) between the waveform of the projected light signal (projected light waveform), shown in chart (a) of Fig. 7B, and the waveform of the received light signal (received light waveform), shown in chart (b) of Fig. 7B, is detected and the distance to the object M to be measured is calculated by converting the phase delay so measured by a delay time measuring circuit 67. The distance over which the light can travel per second is extremely enormous, say, about 300,000,000 meters (300,000 kilometers) per second and the length of time the light can travel a distance of 1 meter is merely about 3.3 nanosecond. For this reason, change in delay time occurring in the projected light receiving circuit and other circuits is considerable enough to adversely affect the result of distance measurement and is required to be suppressed to about 33 picosecond where the practically acceptable accuracy of the distance measurement, for example, that of 10 mm is desired.

Various techniques have hitherto been known and suggested to increase the accuracy of the distance measurement, one of which includes counterbalancing the change in delay time occurring in the projected light receiving circuit as disclosed in, for example, the Patent Document 1 listed below. According to this technique, the use is made of two light projecting sources, one for distance measurement and the other for reference, which provide respective rays of light that are, after having been reflected from the object to be measured about light for measurement, received by a common light receiving circuit. The respective light originating from the measurement light projecting source and the reference light projecting source are subsequently amplified and processed so that the difference between respective times of arrival (delay times) of those received rays of light can be used as a measured distance. In such case, the respective amplitudes of the received light signals are so adjusted in reference to the power of the reference light projected from the reference light projecting source as to match with each other to thereby suppress the change in delay time attributable to the amplitude of the received light signal as will be discussed in detail later.

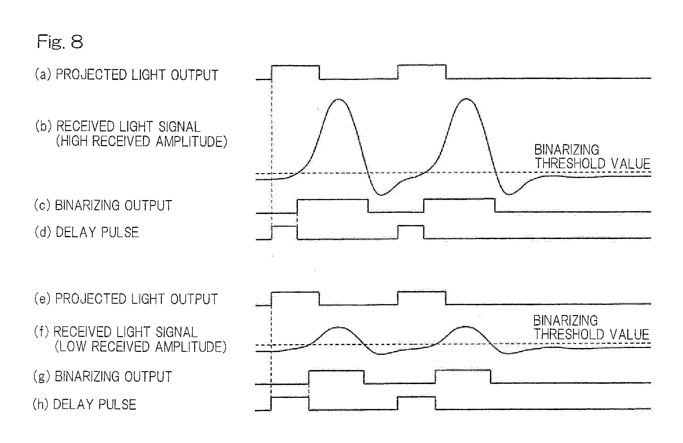

Where the delay time in the received light waveform is required to be measured at high speed, binarization of the received light waveform for subsequent digital process is considered most important. The term "binarization" means that an analog signal is converted to a signal representative of "0 and 1". The analog signal representative of the received light signal having been amplified is to be binarized depending on whether the analog signal after having been amplified is higher or lower than a predetermined threshold value. Fig. 8 illustrates one example of the output waveform of a binarizing circuit. Chart (a) to chart (d) of Fig. 8 apply where the received light signal has a high amplitude whereas chart (e) to chart (h) of Fig. 8 apply where the received light signal has a low amplitude.

As shown in chart (b) and (f) of Fig. 8, the binarizing threshold value is set to a voltage slightly higher than the voltage of the received light signal in the absence of any signal during a period, in which a light projecting element in the light projecting circuit does not project any light, that is, during a non-projecting period. In this case, the timing of the set-up of the binarized output varies because of the amplitude of the received light signal and the duration of a delay pulse corresponding to the delay time from the timing, at which the light is projected, to the timing at which the light is received is fluctuated more considerably in the case of chart (d) of Fig. 8 than that in the case of chart (h) of Fig. 8. In other words, the fluctuation of the amplitude of the received light signal or, in other words, variation of the reflectivity of the light reflected from the object to be measured results in a considerable change in measured distance.

As a method of resolving the above discussed problem, such an device has been known, in which by utilizing delay times of the set-up and set down of the received waveforms when a projected light signal for use in measuring the distance between the distance measuring device to the object to be measured is received and the delay times before being amplified are converted into respective analog voltages, an error resulting from the difference in amplitude between the received signals is corrected. (See, for example, the Patent Document 2 listed below.) It has, however, been found that since in reality the light receiving circuit and the amplifying circuit have respective frequency characteristics different from each other at the stet-up and set-down of the waveforms, the gradients of those set-up and set-down of the waveforms are also different and, hence, it is quite often that the correction of that error fail to work properly.

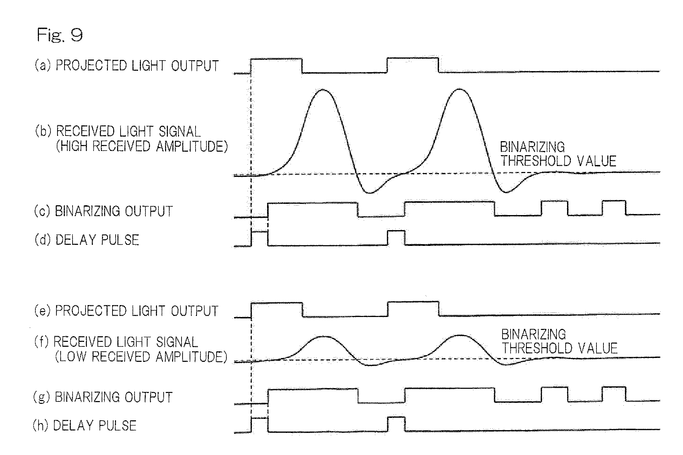

For that reason, it may be contemplated to minimize the error resulting from the difference in amplitude of the received light signals by equalizing the threshold value of the binarizing circuit to a voltage level at the time of absence of any signal. Fig. 9 illustrates one example of the input and output waveforms in this binarizing circuit. Chart (a) to chart (d) of Fig. 9 illustrate those when the amplitude of the received light signal is high whereas chart (e) to chart (h) of Fig. 9 illustrate those when the amplitude of the received light signal is low. In such case, although as represented by Chart (d) and chart (h) of Fig. 9, those two signals make little difference so far as change in time of the delay time resulting from a change in amplitude of the received light signals is concerned, such a problem occurs that a binarizing output changes as represented by chart (b) of Fig. 9 as a cause of a noise component at the time of absence of any signal due to the low threshold value.

### [Prior Art Literature]

[Patent Document 1] JP Published International Application No. 2009-503470
[Patent Document 2] JP Laid-open Patent Publication No. 2006-308357
[Patent Document 3] JP Laid-open Patent Publication No. H06-140901
[Patent Document 4] JP Laid-open Patent Publication No. H05-48543
[Patent Document 5] JP Laid-open Patent Publication No. H05-129857

The change in binarizing output at the time of absence of any signal will little pose any problem in dealing with only the received light signal which has been projected by the light projecting circuit, but it will pose a problem particularly where the necessity arises in monitoring a light receiving condition prior to the projection of light by the light projecting circuit so as to avoid an interference with any other light (See, for example, the Patent Document 3 listed above, that is, JP Laid-open Patent Publication No. H-6-140901), which occurs when, for example, a plurality of devices are used in a juxtaposed fashion or under the environment in which external disturbing light occurs frequently, or where the necessity arises in adjusting a reverse bias voltage to an optimum multiplication factor for an avalanche photodiode, which is a light receiving element, by detecting the noise level at the time of absence of any signal (See, for example, the Patent Document 4, i.e., JP Laid-open Patent Publication No. H05-48543 and the Patent Document 5, i.e., JP Laid-open Patent Publication No. H05-129857), and, therefore, it is necessary to stabilize the received light signal output at the time of absence of any signal during the non-light projecting period of the light projecting circuit.

On the other hand, regarding the problem associated with the change in delay time in the light projecting and receiving circuits, it may be resolved to a certain extent if a common light receiving circuit is employed to receive both of a projected measurement light and a projected reference light so that changes in delay time in the light receiving element and the amplifying circuit can be counterbalanced with each other such as disclosed in the Patent Document 1 listed above. However, if an electric technique or, in most cases, a technique for changing the projected light current is employed as means for adjusting the projected light power relative to the change in delay time resulting from the amplitude of the received light signal, the delay time in light projection will change so considerably as to result in a problem that corrections for measurement use and for reference use will no longer work properly. For this reason, the necessity will arise to adjust the projected light power optically and, in this case, mechanical complication and high cost will result in to such an extent as to hamper the practical applicability. Also, such a problem that the light projecting circuit may be adversely affected by variation in the light projecting elements for measurement and reference purposes and the light projecting drive circuits for measurement and reference purposes will remain unsolved in the light projecting circuit.

In addition, it may be contemplated to use the light projecting circuit commonly for measurement and reference purposes, but the necessity will arise to switch the light, projected from the single light projecting element, so as to travel along an optical path for the measurement use or to travel along an optical path for the reference use (compensation use), resulting in complication in structure.

In view of the foregoing, the present invention has been devised to substantially resolve the various problems and inconveniences hitherto encountered with and is intended to provide an optical wave distance measurement device of a type in which the received light signal output at the time of absence of any signal during the non-light projecting period of the light projecting circuit is stabilized and the measurement accuracy can be increased while influences brought about by change in circuit delay time are minimized.

### DISCLOSURE OF THE INVENTION

In order to accomplish the foregoing object, the present invention provides an optical wave distance measurement device which includes a light projecting circuit including a measurement laser diode, which is a light projecting element for projecting a projecting measurement light signal towards an object to be measured, a measurement dual gate MOSFET, which is a drive element for driving the measurement laser diode, a reference laser diode, which is a light projecting element for projecting a projecting reference light signal through an optical path within the device, and a reference dual gate MOSFET, which is a drive element for driving the reference laser diode; a common light receiving circuit for receiving both of a projected measurement light signal, which has been projected from the light projecting circuit and subsequently reflected from the object to be measured, and a projected reference light signal which has been projected by the reference laser diode and subsequently passed through the optical path within the device; and a distance calculating circuit for determining a first delay time of a received light signal, which is received after the projected measurement light signal has been reflected from the object to be measured, from the projecting measurement light signal in dependence on a distance to the object to be measured, and a second delay time of a received light signal, which is the projected reference light, from such projected reference light signal, by binarizing respectively those received light signals and for calculating the distance to the object to be measured on the basis of the difference between the first and second delay times.

The light projecting circuit referred to previously is of a structure in which the measurement and reference laser diodes are of the same type and are positioned in proximate to each other so that those measurement and reference laser diodes can attain substantially equal temperatures and, similarly, the measurement and reference dual gate MOSFETs are of the same type and are positioned in proximate to each other so that those measurement and reference dual gate MOSFETs can attain substantially equal temperatures and that using the same drive current determined by a monitor current of either one of the measurement and reference laser diodes, the measurement and reference laser diodes are respectively driven by the measurement and reference dual gate MOSFETs, and the distance calculating circuit referred to previously includes a threshold voltage calculating circuit for determining a binarizing threshold voltage, which is used in binarizing the received light signal from the light receiving circuit, with a voltage obtained by means of a negative feedback connection of an inverted logic gate, and a threshold voltage shift circuit for shifting the binarizing threshold voltage between a period of projection of light by the light projecting circuit and a period of non-projection of light.

According to the present invention outlined above, in order to stabilize a received light signal output at the time of absence of any signal during a non-light projecting period of a light projecting circuit, a binarizing threshold value used during binarization of a received light signal is shifted for a light projecting period and a non-light projecting period. Also, in order to minimize influences brought about by a change in circuit delay time, measurement and reference laser diodes employed in the light projecting circuit, as well as measurement and reference dual gate MOSFETs for driving the measurement and reference laser diodes, respectively, are of the same type with each other and are positioned in proximity to each other so that they can have respective temperatures that are near to each other, and both of the measurement and reference laser diodes are driven with the use of the same drive current determined by a monitor current of either one of the measurement and reference laser diodes, and the projected measurement light signal and the projected reference light signal are received by a common light receiving circuit. Accordingly, not only can the received light signal output at the time of absence of any signal during the non-light projecting period of the light projecting circuit be stabilized, but also the measurement accuracy can be increased while the influences brought about by the change in delay time in the circuit are minimized.

In a preferred embodiment of the present invention, the threshold voltage shift circuit selectively uses one of two binarizing threshold voltages obtained by the threshold voltage calculating circuit, for the period of projection of light by the light projecting circuit and the period of non-projection of light. Accordingly, not only can the received light signal output at the time of absence of any signal during the non-light projecting period of the light projecting circuit be stabilized, but also the measurement accuracy can be increased while the influences brought about by the change in delay time in the circuit are minimized.

In another preferred embodiment of the present invention, the distance calculating circuit referred to above includes a delay pulse - analog voltage converting circuit for integrating delay pulses of each of received measurement and reference light signals, which have been received by the common light receiving circuit and binarized therein, to thereby generate an analog voltage proportional to each of those delay times, such that by subtracting the analog voltage of the received reference light signal so generated, from the analog signal of the received measurement light signal so generated. Accordingly, the measuring accuracy can be further increased while influences brought about by the change in delay time of the light projecting circuit and that of the light receiving circuit are minimized.

In a further preferred embodiment of the present invention, the delay pulse-analog voltage converting circuit referred to above counts the number of pulses of the received reference light signals, which correspond to the projected reference light signals, and then validate the received reference light signal only when the count of those pulses is equal to the number of the pulses of the projected reference light signal. Accordingly, in the event that the received light signal is not normal such as occurring, for example, when the received light signal is weak and/or an accurate measurement result cannot be obtained because of interference by external disturbing rays of light, malfunction can be prevented.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a structural diagram showing an optical wave distance measurement device designed in accordance with a preferred embodiment of the present invention;
Fig. 2 is a structural diagram showing the details of a light projecting circuit;
Fig. 3 is a structural diagram showing a circuit for converting a delay pulse of a received light signal into an analog voltage;
Fig. 4 is a diagram showing one example of various pulse signals outputted from the light projecting circuit;
Fig. 5 is a structural diagram showing the details of a light receiving circuit and a distance calculating circuit;
Fig. 6 is a diagram showing input and output waveforms associated with binarization performed by the distance calculating circuit;
Fig. 7A illustrates a basic structure of the conventional optical wave distance measurement device;
Fig. 7B is a diagram showing various measurement waveforms appearing in the conventional optical wave distance measurement device;
Fig. 8 is a diagram showing input and output waveforms associated with binarization occurring in the conventional optical wave distance measurement device; and
Fig. 9 is a diagram showing input and output waveforms associated with binarization occurring in the conventional optical wave distance measurement device.

### DESCRIPTION OF PREFERRED EMBODIMENTS

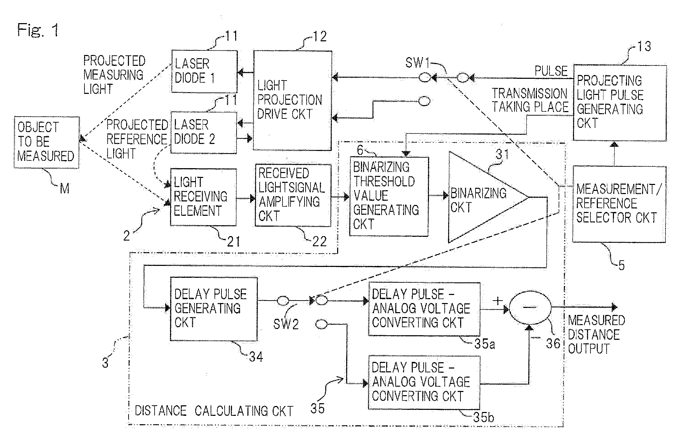

Hereinafter, the present invention will be described in detail in connection with a preferred embodiment thereof with reference to the accompanying drawings, particularly to Figs. 1 to 6. Fig. 1 illustrates a structural diagram of an optical wave distance measurement device according to the preferred embodiment of the present invention. This optical wave distance measurement device includes a light projecting circuit 1 for projecting two light signals use in measurement and in providing a reference light beam, a common light receiving circuit 2 for receiving both of the reference light signal and the measurement light signal, projected from the light projecting circuit 1 and subsequently reflected from an object M to be measured, a distance calculating circuit 3 for calculating the distance from the distance measuring device to the object M on the basis of a delay time of a received light signal, which has been received after the reflection from the object M, from a projected light signal, and a measurement/reference selector circuit 5 for selectively outputting one of two selector signals for use in distance measurement and reference. The distance calculating circuit 3 includes a binarizing threshold value generating circuit 6 for generating a binarizing threshold value that is used in binarizing the received light signal.

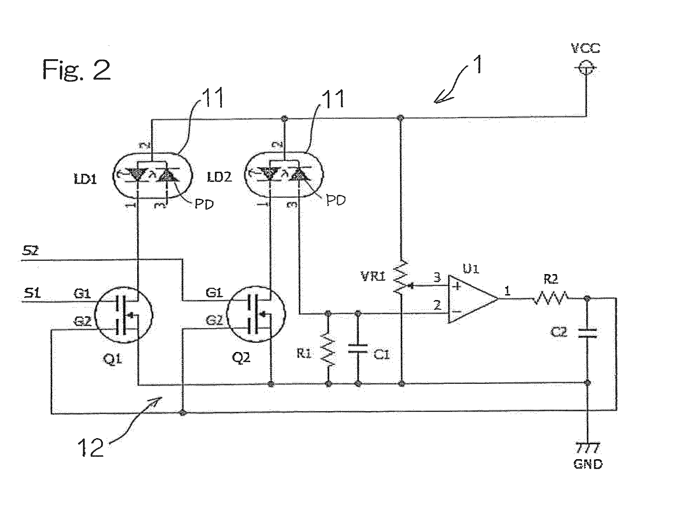

The light projecting circuit 1 includes, as two light projecting elements 11, 11, a measurement laser diode LD1 for projecting the measurement light signal towards the object M to be measured and a reference laser diode LD2 for projecting the reference light signal for projecting the reference light signal through an optical path defined within the device, and also includes a light projection drive circuit 12 for driving those light projecting elements 11, 11 and a projecting light pulse generating circuit 13 for generating a projecting light pulse signal, based on a predetermined frequency of oscillation, to thereby drive the light projection drive circuit 12. The light projection drive circuit 12 makes use of a measurement dual gate MOSFET Q1 and a reference dual gate MOSFET Q2 as respective drive elements for driving the laser diodes LD1 and LD2 (shown in Fig. 2).

It is to be noted that although in the instance as shown, the oscillation frequencies for measurement and reference uses, respectively, of the projecting light pulse signal are chosen to be the same, that is, the measurement projecting light signal and the reference projecting light signal are chosen to have the same frequencies to thereby simplify the structures of the light projection drive circuit 12 and the projecting light pulse generating circuit 13, they may be different from each other.

The measurement/reference selector circuit 5 is operable to output the measurement or reference selector signal to the projecting light pulse generating circuit 13 and a switch SW1 and to apply a measurement or reference light projecting pulse signal, generated by the projecting light pulse generating circuit 13, to the light projection drive circuit 12 after having been alternately switched by the switch SW1. Accordingly, the light projection drive circuit 12 is driven on the basis of each projecting light pulse signal to allow the measurement laser diode LD1 and the reference laser diode LD2 to independently and alternately emit the projected measurement light signal and the projected reference light signal, respectively. As will be detailed later, this measurement/reference selector circuit 5 outputs the measurement/reference selector signal to a switch SW2 to alternately switch the switch SW2 in synchronism with the switch SW1 so that a delayed pulse of received measurement and reference light signals, generated by a delayed pulse generating circuit 34, can be fed to analog voltage converting circuit 35 for measurement and reference uses, respectively.

The details of the light projecting circuit 1 are shown in Fig. 2. Of the two light projecting elements 11 and 11, the measurement laser diode LD1 has a photodiode PD built therein operable to monitor the power of the light projected from the measurement laser diode LD1 and then to output a monitor current whereas the reference laser diode LD2 similarly has a photodiode PD built therein. Each of the photodiodes (PD) is provided with an output terminal for the monitor current.

Each of the measurement dual gate MOSFET Q1 and the reference dual gate MOSFET Q2, both employed in the light projection drive circuit 12, has dual gates G1 and G2. Those measurement and reference dual gate MOSFETs Q1 and Q2 are driven when respective control voltages based on the common monitor current are applied to the corresponding gates G2, G2 as a result that a measurement projecting light pulse signal S1, generated by the projecting light pulse generating circuit 13, is applied to the gate G1 of the measurement dual MOSFET Q1 and a reference projecting light pulse signal S2, generated by the projecting light pulse generating circuit 13, is applied to the gate G1 of the reference dual MOSET Q2.

In the light projection drive circuit 12, a resistor R1 and a capacitor C1 altogether constitute a peak hold circuit for the monitor current and a comparator U1 compares the peak value of the monitor current with a threshold value of the monitor current determined by a variable resistor or volume VR1. A resistor R2 and a capacitor C2 altogether constitute a low pass filter (LPF) operable to filter an On/Off output of the comparator U1 for a prolonged time to a constant voltage.

Referring particularly to Fig. 2, since when the projected light power of either one of the measurement and reference laser diodes LD1 and LD2, for example, that of the reference laser diode LD2 in the instance as shown increases accompanied by an increase of the monitor current (at a pin 3 of the reference laser diode LD2), the monitor current is inputted to a negative input terminal of the comparator U1, an output voltage from an output terminal of the comparator U1 decreases correspondingly and is then inputted to the gate G2 of each of the dual MOSFETs. In this way, since when the monitor current increases as a result of an increase of the projected light power of each of the measurement and reference laser diodes LD1 and LD2, the control voltage at the gate G2 is lowered, the respective projected light powers of the measurement and reference laser diodes LD1 and LD2 lower and, hence, a stable output control can be obtained. In general, at the time of shipment from the manufacturing plant, the volume VR1 is so adjusted that the laser diodes LD1 and LD2 can project light at desired or required output.

Since as described above, using the same drive current determined by the monitor current of the reference laser diode LD2, the measurement and reference laser diodes LD1 and LD2 are respectively driven by the measurement and reference dual gate MOSFETs Q1 and Q2, any variation in delay time on the circuitry can be suppressed. The monitor current of the reference laser diode LD2 is utilized in the manner described above because the monitor current of the laser diode is apt to vary considerably from one element to another and, therefore, a desirable result can be obtained if monitoring is effected by means of either one of them, particularly that on the reference side. The reason therefor is that it is desirable to stabilize the projected light power on the reference side since as compared with a change in amount of light received that generally occurs, the variation of the projected light power on the measurement side is directly linked to variation in reflectance of the object M to be measured and, hence, it can be considered insignificant. It is, however, to be noted that if variation from element to another is small, the monitoring current of each of the laser diodes LD1 and LD2 may be employed.

Also, in the distance measuring device of the present invention, the same types of laser diodes are employed for the measurement and reference laser diodes LD1 and LD2 in the light projecting circuit 1, shown in Fig. 2, respectively, and are positioned in proximity to each other so that respective temperature of those measurement and reference laser diodes LD1 and LD2 can attain substantially equal values. Similarly, the same types of dual gate MOSFETs are employed for the measurement and reference dual gate MOSFETs Q1 and Q2, respectively, and are positioned in proximity to each other so that respective temperature of those measurement and reference dual gate MOSFETs Q1 and Q2 can attain substantially equal values. It is to be noted that the term "same" types of the elements referred to above means that the elements in question is products of the same models such as dual gate MOSFET or laser diode. Owing to the use of the same types, they can be driven so that the variation in delay time attributable to those elements can be minimized. At the same time, since the elements are positioned in proximity to each other to minimize the difference in temperature between those elements, the variation in delay time of the light projecting circuit 1 can be minimized.

The light receiving circuit 2 includes a common light receiving element 21 capable of receiving a projected light signal for use in distance measurement (referred to as a projected measurement light signal), which has been projected from the light projecting circuit 1 and subsequently reflected from the object M to be measured, and a projected light signal for reference purpose (referred to as a projected reference light signal), which has been projected from the light projecting circuit 1 and has passed within the device, to thereby provide a received light signal, and a received light signal amplifying circuit 22 for amplifying the received light signal. In the present invention, the projected reference light signal is inputted to the common light receiving element 21, the projected measurement light signal and the projected reference light signal are both inputted to the common light receiving element 21 in respective light conditions, and the measurement and reference received light signals are amplified by the received light signal amplifying circuit 22. For this reason, the common light receiving circuit 2 can be concurrently used for the measurement purpose and the reference purpose (for compensation purpose) and, therefore, variations in delay time on the circuit can be counterbalanced.

The distance calculating circuit 3 referred to previously is operable to binarize the received light signal, which is the projected measurement light signal having been reflected from the object M to be measured, to determine the first time of delay of such received light signal relative to the projected measurement light signal in dependence on the distance from the distance measuring device to the object M to be measured and, also, to binarize the received light signal to determine the time of delay of the received light signal, which has received the projected reference light signal, relative to the projected reference signal, and then to calculate the distance between the distance measuring device to the object M based on the difference of those two delay times. For this purpose, the distance calculating circuit 3 includes a binarizing threshold value generating circuit 6, a binarizing circuit 31, a delay pulse generating circuit 34, a switch SW2, a delay pulse - analog converting circuit 35 and a subtracting circuit 36.

The binarizing threshold value generating circuit 6 referred to above in turn includes a threshold voltage calculating circuit 32 for determining a threshold value voltage, which is used in binarizing the received measurement light signal and the received reference light signal, both fed from the light receiving circuit 2, with a voltage obtained by means of a negative feedback connection of an inverted logic gate, and a threshold voltage shift circuit 33 for shifting the binarizing threshold value voltage between the period of projection of light by the light projecting circuit 1 and the period of non-projection of light.

The binarizing circuit 31 referred to above is operable to binarize the received measurement light signal and the received reference light signal, fed from the light receiving circuit 2, on the basis of the generated binarizing threshold value. The delay pulse generating circuit 34 referred to above is operable to generate respective delay pulses representative of the time of delays of the received measurement and reference light signals, which have received the projected light signal, relative to such projected light signal.

The measurement/reference selector circuit 5 referred to previously is operable to provide the switch SW2 with a measurement/reference switching signal to cause the switch S2 to be alternately switched from one position to another in synchronism with the switch SW1 so that the delay pulses of the received measurement and reference signals, generated by the delay pulse generating circuit 34, can be supplied to the delay pulse - analog voltage converting circuit 35 for measurement and reference purposes one at a time.

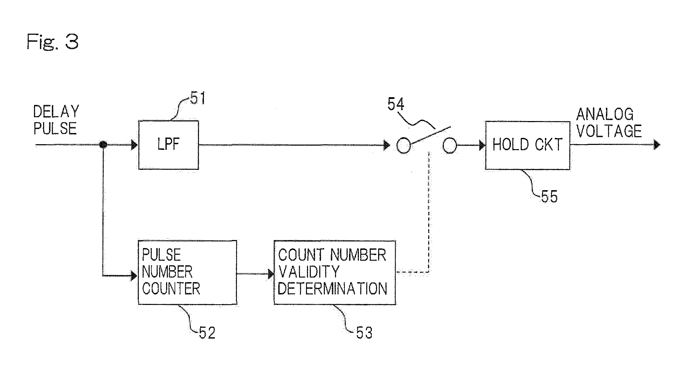

The delay pulse - analog converting circuit 35 is made up of a delay pulse - analog converting circuit 35a for measurement use and a delay pulse - analog converting circuit 35b for reference use and is so designed and so configured that , depending on the position of the switch SW2, the delay pulses representative of the binarized received light signals for the measurement and reference purposes, fed from the delay pulse generating circuit 34, can be integrated to provide an analog voltage proportional to the delay time by means of one of the delay pulse - analog converting circuits 35a and 35b. As shown in Fig. 3, the delay pulse - analog converting circuit 35 includes a low pass filter (LPF) 51, a pulse number counter 52, a count number validity determination 53, a changeover switch 54 and a hold circuit 55.

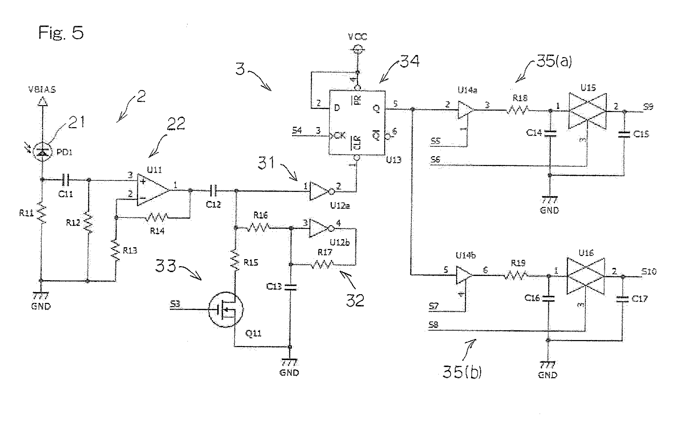

Referring particularly to Fig. 3, the delay pulse generated by the delay pulse generating circuit 34 is integrated by the low pass filter (LPF) 51 as far as the reference delay pulse is concerned and, on the other hand, the number of delay pulses representative of the received light signal received with respect to the projected reference light signal which has been projected is counted by the pulse number counter 52; if the count of the delay pulses so counted by the pulse number counter 52 is equal to the number of projected light pulses representative of the projected reference light signal so projected, the received reference light signal (reference voltage) is validated by the count validity determination 53; and the gate of an analog switch (indicated by U13 in Fig. 5) as will be described later is opened to allow it to be transferred to the hold circuit 55. If the count of the delay pulses is not equal to the number of the projected light pulses referred to above, the received light signal is neglected and, therefore, any undesirable erroneous operation, which would otherwise occur when the received light signal is weak and/or no proper measurement result is obtained as a result of interference by external rays of light.

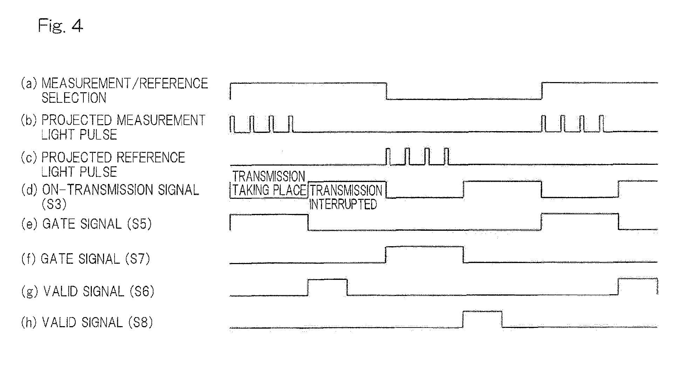

Fig. 4 illustrates one example of various pulse signals outputted from the light projecting circuit 1. Chart (a) of Fig. 4 represents a measurement/reference switching signal; chart (b) and (c) of Fig. 4 represent a projecting light pulse signal S1 for measurement purpose (a measurement projecting light pulse signal) and a projecting light pulse signal S2 for reference purpose (a reference projecting light pulse signal), respectively; chart (d) of Fig. 4 represents an on-transmission signal S3 indicative of the projecting light pulse signal being transmitted and interrupted; chart (e) and (f) of Figs. 4 represent a gate signal S5, which is turned on when the measurement projecting light pulse signal S1 shown in chart (b) of Fig. 4 is being projected, and a gate signal S7, which is turned on when the reference projecting light pulse signal S2 is being projected, respectively; and chart (g) and (h) of Fig. 4 represent respective valid signals S6 and S8 which are outputted when the received light signal is determined valid. In chart (b) and (c) of Fig. 4, one projected light pulse has been shown occurring four times, but it may not necessarily be limited thereto and any arbitrarily chosen number of times can be used.

The subtracting circuit 37 shown in Fig. 1 is operable to subtract the analog voltage, which has been converted from the delay time (delay pulse) of the received reference light signal, from the analog voltage, which has been converted from the delay time (delay pulse) of the received measurement light signal then validated, to thereby calculate the distance to the object M to be measured. Thus, by counterbalancing the respective delay times of the received measurement and reference light signals with each other, an undesirable influence which will result from any change in peculiar delay time on the circuit of the light projecting circuit 1 can be minimized to increase the measurement accuracy.

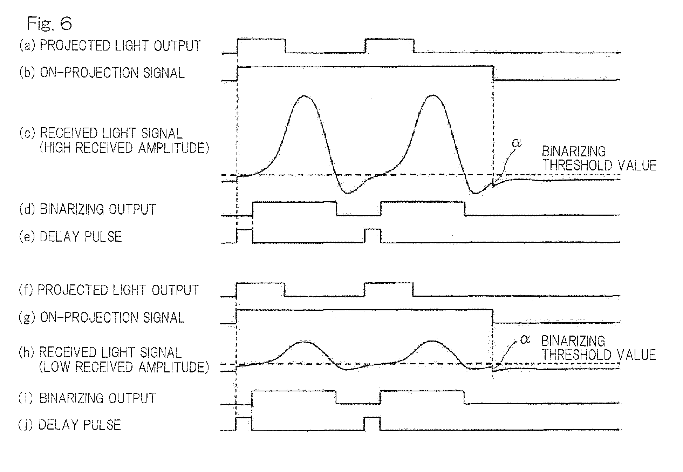

Fig. 5 illustrates the details of the light receiving circuit 2 and of the distance calculating circuit 3. Fig. 6 illustrates one example of input and output waveforms associated with the binarization performed in the distance calculating circuit 3. Chart (a) to (d) of Fig. 6 pertain to the case in which the amplitude of the signal is high whereas chart (e) to (h) of Fig. 6 pertain to the case in which the amplitude of the signal is low.

The light receiving element 21 employed in the light receiving circuit 2 shown in Fig. 5 is in the form of a photodiode PD1 for receiving light and this photodiode PD1 is connected in a direct current mode with the ground GND through a resistor R11 when a reverse bias voltage VBIAS is applied thereto. By the function of a capacitor C11, a direct current light component such as, for example, that caused by a fluorescent lamp and/or external disturbing light is removed to allow only the received light signal, which has received the projected light signal, to pass therethrough. Resistors R12, R13 and R14 and a comparator U11 altogether form a received light signal amplifying circuit 22 for amplifying the received light signal.

A binarizing threshold value generating circuit 6 includes a capacitor C12 for removing a direct current component of the received light signal which has been amplified by the received light signal amplifying circuit 22, and an inverter U12a for converting (binarizing) an analog voltage of the received light signal to a binary signal. A threshold voltage calculating circuit 32 employed in the binarizing threshold value generating circuit 6 includes an inverter U12b, which is of a type similar to, and accommodated within the same element as, the inverter U12a, and a structure in which an intrinsic threshold value voltage of the inverter U12a is applied to a capacitor C13 when an output from the inverter U12 is negative feed back through a resistor R17. The threshold value voltage shift circuit 33 includes a resistor R16 for applying that threshold value voltage to the inverter U12a, a resistor R15 connected parallel to the resistor R16 for varying the threshold value voltage to be applied to the inverter U12a, and a MOSFET Q11.

When during the light projecting period a on-projection signal of the light projecting circuit 1 is turned on (chart (b) and (g) of Fig. 6) and the MOSFET Q11 is switched off as a result of application of this on-projection (on-transmission) signal S3 (best shown in Fig. 4), the binarizing threshold voltage given to the inverter U12a, a voltage equal to the intrinsic threshold voltage of the inverter U12a generated by the inverter U12B through the resistor R16 is applied during a period in which the MOSFET Q11 is switched off, to thereby allow the set-up timing of the received light signal to be reflected accurately in the binarized output.

The MOSFET Q11 is switched on when the on-projection signal of the light projecting circuit 1 is turned off (chart (b) and (g) of Fig. 6) during the non-light projecting period, and when the on-projection (on-transmission) signal S3 is not applied. By this switch-on of the MOSFET Q11, the voltage to be applied to the inverter U12a is divided across the resistors R15 and R16, accompanied by lowering down from the voltage during the light projecting period in a manner as shown by *α* (chart (c) and (h) of Fig. 6). Accordingly, since the received light signal is shifted to a value lower than the binarizing threshold value, the binarized output will be hardly affected by an influence brought about by noises at the time of absence of any signal and will be hardly changed by the noises. In this way, the binarizing threshold value is shifted relatively from a predetermined value defined in view of the circuit. It is to be noted that in place of that described above, the use may be made of, for example, a comparator so that the binarizing threshold value can be directly shifted by the comparison with a predetermined reference voltage. Moreover, it is to be noted that the threshold voltage shift circuit may selectively use one of two binarizing threshold voltages obtained by the threshold voltage calculating circuit, for the period of projection of light by the light projecting circuit and the period of non-projection of light. By so doing, by directly or relatively changing the threshold value of the binarizing threshold circuit 6 for the light projecting period and the non-light projecting period of the light projecting circuit 1, a delay pulse width change, which would result from a received amplitude change, can be minimized to stabilize a received light signal output at the time of absence of any signal, resulting in an increase of the measuring accuracy.

The delay pulse generating circuit 34 shown in Fig. 1 includes a flip-flop U13 for generating a delay pulse from the start of light projection of the projecting light signal until the set-up of the received signal as shown in Fig. 5, and a signal S4 is applied a the projecting light pulse signal from the projecting light pulse generating circuit 13. This delay pulse is outputted from a pin 5 of the flip-flop U13. A terminal Q of the flip-flop U13 is turned on in response to the set-up of the light projecting signal and is turned off in response to the set-up of the received light signal, thereby outputting an On/Off pulse. The On duration of the pulse will be long if the distance to the object M to be measured is large, but will be short if such distance is small. In this way, the delay pulse appropriate to the delay time dependent on the distance of the object M to be measured can be generated.

In the delayed pulse - analog voltage converting circuit 35, the delay pulse is applied to the inverters U14a and U14b. The inverter U14a is applied from the gate signal S5 (shown in Fig. 4) a signal which is turned on during a measurement light projecting period (chart (b) and (g) of Fig. 6), and the inverter U14b is applied from the gate signal S7 (shown in Fig. 4) a signal which is turned on during a reference light projecting period (chart (b) and (g) of Fig. 6). A resistor R18 and a capacitor C14, and a resistor R19 and a capacitor C16 form respective low pass filters (LPFs) for converting the delay pulse signal widths (chart (e) and (j) of Fig. 6) for reference use into associated analog voltages.

Analog switches U15 and U16 have respective gates that are controlled by the valid signals S6 and S8 (shown in Fig. 4), and open their gates for a constant length of time, only when the received pulse number is valid, so that an analog voltage of the delay pulse of the valid received light signal can be delivered to associated hold capacitors C15 and C17. In signals S9 and S10 converted into corresponding analog voltages, by the function of the subtracting circuit 35 best shown in Fig. 1, the analog voltage of the signal S10 is subtracted from the analog voltage of the signal S9 and, accordingly, the distance to the object M to be measured can be calculated.

The present invention having been so fully described is effective not only to stabilize the received light signal output at the time of absence of any signal during the non-light projecting period of the light projecting circuit 1 by shifting the binarizing threshold value of the received light signal between the light projecting period and the non-light projecting period of the light projecting circuit, but also to minimize the influence of the circuit delay time variation in each of the light projecting circuit 1 and the light receiving circuit 2 to thereby increase the measuring accuracy.

More specifically, according to the present invention, so that the received light signal output at the time of absence of any signal during the non-light projecting period of the light projecting circuit 1 can be stabilized, the binarizing threshold value used at the time of binarization of the received signal is shifted between the light projecting period and the non-light projecting period of the light projecting circuit 1. At the same time, so that the influence brought about by the circuit delay time variation can be minimized, the measurement and reference laser diodes LD1 and LD2 employed in the light projecting circuit 1, as well as the measurement and reference dual gate MOSFETs Q1 and Q2 for driving the measurement and reference laser diode LD1 and LD2, respectively, are of the same type with each other and are positioned in proximity to each other so that they can have respective temperatures that are near to each other; both of the measurement and reference laser diodes LD1 and LD2 are driven with the use of the same drive current determined by the monitor current of either one of the measurement and reference laser diodes LD1 and LD2, and the projected measurement light signal and the projected reference light signal are received by the common light receiving circuit 2. By so doing, not only can the received light signal output at the time of absence of any signal during the non-light projecting period of the light projecting circuit 1 be stabilized, but also the measurement accuracy can be increased while the influence caused by the circuit delay time variation is minimized.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1: Light projecting circuit
- 2: Light receiving circuit
- 3: Distance calculating circuit
- 5: Measurement/reference selector circuit
- 6: Binarizing threshold value generating circuit
- 31: Binarizing circuit
- 32: Threshold voltage calculating circuit
- 33: Threshold voltage shift circuit
- 34: Delay pulse generating circuit
- 35: Delay pulse - analog voltage converting circuit
- LD1, LD2: Laser diode
- Q1, Q2: Dual Gate MOSFET
- M: Object to be measured

## Claims

1. An optical wave distance measurement device which comprises:
a light projecting circuit including a measurement laser diode, which is a light projecting element for projecting a projecting measurement light signal towards an object to be measured, a measurement dual gate MOSFET, which is a drive element for driving the measurement laser diode, a reference laser diode, which is a light projecting element for projecting a projecting reference light signal through an optical path within the device, and a reference dual gate MOSFET, which is a drive element for driving the reference laser diode;
a common light receiving circuit for receiving both of a projected measurement light signal, which has been projected from the light projecting circuit and subsequently reflected from the object to be measured, and a projected reference light signal which has been projected by the reference laser diode and subsequently passed through the optical path within the device; and
a distance calculating circuit for determining a first delay time of a received light signal, which is received after the projected measurement light signal has been reflected from the object to be measured, from the projecting measurement light signal in dependence on a distance to the object to be measured, and a second delay time of a received light signal, which is the projected reference light, from such projected reference light signal, by binarizing respectively those received light signals and for calculating the distance to the object to be measured on the basis of the difference between the first and second delay times;
in which the light projecting circuit referred to previously is of a structure in which the measurement and reference laser diodes are of the same type and are positioned in proximate to each other so that those measurement and reference laser diodes can attain substantially equal temperatures and, similarly, the measurement and reference dual gate MOSFETs are of the same type and are positioned in proximate to each other so that those measurement and reference duel gate MOSFETs can attain substantially equal temperatures and that using the same drive current determined by a monitor current of either one of the measurement and reference laser diodes, the measurement and reference laser diodes are respectively driven by the measurement and reference dual gate MOSFETs; and
in which the distance calculating circuit referred to previously includes a threshold voltage calculating circuit for determining a binarizing threshold voltage, which is used in binarizing the received light signal from the light receiving circuit, with a voltage obtained by means of a negative feedback connection of an inverted logic gate, and a threshold voltage shift circuit for shifting the binarizing threshold voltage between a period of projection of light by the light projecting circuit and a period of non-projection of light.

2. The optical wave distance measurement device as claimed in claim 1, in which the threshold voltage shift circuit selectively uses one of two binarizing threshold voltages obtained by the threshold voltage calculating circuit, for the period of projection of light by the light projecting circuit and the period of non-projection of light.

3. The optical wave distance measurement device as claimed in claim 1, in which the distance calculating circuit includes a delay pulse-to-analog voltage converting circuit for integrating delay pulses of each of received measurement and reference light signals, which have been received by the common light receiving circuit and binarized therein, to thereby generate an analog voltage proportional to each of those delay times, such that by subtracting the analog voltage of the received reference light signal so generated, from the analog signal of the received measurement light signal so generated.

4. The optical wave distance measurement device as claimed in claim 3, in which the delay pulse-to-analog voltage converting circuit counts the number of pulses of the received reference light signals, which correspond to the projected reference light signals, and then validate the received reference light signal only when the count of those pulses is equal to the number of the pulses of the projected reference light signal.
